# EUROPEAN PATENT APPLICATION

(11) **EP 4 624 146 A1**
(43) Date of publication of application: **01.10.2025**
(21) Application number: 24167748.3
(22) Date of filing: 28.03.2024
(51) Int. Cl.: B32B 1/08, B32B 3/06, B32B 7/14, B32B 27/10, B32B 27/32, B32B 29/00, B65D 35/10, B65D 35/12, B65D 65/40

(54) **TUBE COMPRISING A SKIRT MADE OF A LAMINATED MATERIAL**

(71) Applicant: ALBEA SERVICES, 92230 Gennevilliers (FR)
(72) Inventor: PANDYA, Sanket, 92230 GENNEVILLIERS (FR); MUTHA, Nitin, 92230 GENNEVILLIERS (FR)
(74) Representative: Gevers & Orès

(57) **Abstract**

The invention concerns a tube (10) intended to contain a product and comprising at least a tubular skirt (14) extending along a main axis (A) made of a sheet (36) of laminated material (15) comprising at least one paper layer (15A) comprising cellulose fibers, the composition of a most internal layer (15B) of the skirt (14) in contact with the product comprising no polyolefin,
the tubular skirt (14) being closed by welding at least one weld area (34A, 34B, 34C, 34D) of an internal face (35) of the sheet (36) of laminated material (15),
wherein the internal face (35) of the sheet (36) of laminated material (15) is covered, only in the at least one weld area (34A, 34B, 34C, 34D), by a weldable layer (15D) comprising polyolefin.

## Description

The invention relates to a tube intended to contain a product and comprising at least a tubular skirt made of a sheet of laminated material comprising at least one paper layer comprising cellulose fibers, the composition of a most internal layer of the skirt in contact with the product comprising no polyolefin, the tubular skirt being closed by welding at least one weld area of an internal face of the sheet of laminated material.

Nowadays, the worldwide plastic production represents one of the biggest packaging waste sources. The consumption and the recycling of these plastic products is a major concern for national and regional organizations. The non-recycled plastic materials are currently disposed of by a variety of processes from landfill disposal to energy recovery through thermal and chemical treatments.

In the case of cosmetic packaging industry, laminated materials comprising several plastic layers are widely used as they represent advantages in terms of product protection and mechanical properties.

Some alternatives to plastics are studied in many technical fields. In the field of cosmetics packaging, it has already been envisaged to replace some plastic layers with a paper layer. As the paper is easily recyclable, the presence of a paper layer improves the recyclability of the laminated material. The thicker the paper layer, the higher the proportion of paper in the laminate and the more recyclable the laminate.

However, the internal face of the paper is entirely covered by a most internal layer comprising polyolefin. This most internal layer has two functions. It must be weldable to allow closing the skirt to form a tightly closed tube. The second function of this most internal layer is to form a moisture barrier which protect the paper layer against the moisture of the product contained in the tube.

However, such a most internal layer increased the quantity of plastic in the tube.

The present invention attempts to reduce the quantity of plastic material in the head of the tube.

The invention relates to a tube intended to contain a product and comprising at least a tubular skirt extending along a main axis made of a sheet of laminated material comprising at least one paper layer comprising cellulose fibers, the composition of a most internal layer of the skirt in contact with the product comprising no polyolefin,
the tubular skirt being closed by welding at least one weld area of an internal face of the sheet of laminated material, wherein the internal face of the sheet of laminated material is covered, only in the at least one weld area, by a weldable layer comprising polyolefin.

According to some embodiment of the invention, the weldable layer is added under said most internal layer in contact with the product.

According to some embodiment of the invention, the tubular skirt comprises at least two weld areas arranged at both end sections of the skirt in order to close both ends of the skirt by welding.

According to some embodiment of the invention, at least one end of the tubular skirt is closed by pinching said end so that one half of the associated weld area is flat welded against the other half of the said weld area.

According to some embodiment of the invention, at least one end of the tube comprises head having a head to distribute the product, the weld area associated with said end being welded against the periphery of the head.

According to some embodiment of the invention, the tubular skirt is obtained by rolling the sheet of laminated material and attaching joining sides together, at least one joining side of the sheet comprising a weld area.

According to some embodiment of the invention, exactly one joining side of the sheet comprises a weld area to be weld against the external face of the second joining side by welding.

According to some embodiment of the invention, the two joining sides of the sheet comprise a weld area to be weld against a strip of weldable material arranged inside the tube along the joining sides.

According to some embodiment of the invention, the head comprises a shoulder made of an annular piece of laminated material comprising at least one paper layer comprising cellulose fibers, the composition of the most internal layer of the annular piece in contact with the product comprising no polyolefin, said shoulder extending radially between an upper end of the tube skirt and the neck.

According to some embodiment of the invention, an annular inner section of the shoulder is attached to the neck by welding one weld area of the internal face of the annular piece.

According to some embodiment of the invention, the internal face of the annular piece is covered, only in the at least one weld area, by a weldable layer comprising polyolefin, the rest of the internal face being free of weldable layer.

According to some embodiment of the invention, the shoulder and the skirt are made of the same laminated material.

According to some embodiment of the invention, the cellulose fibers represent at least 70% in mass of the tube, preferably more than 80%.

According to some embodiment of the invention, the most inner layer of the laminated material comprises an acrylic copolymer latex.

The invention will be better understood thanks to the following description which is only indicative and which is not intended to limit said invention, accompanied with the following figures:
- figure 1 is a perspective view of a tube produced in accordance with the invention;
- figure 2 is an axial sectional view of figure 1 which shows the head of the tube and an upper section of the skirt;
- figure 3 is an axial sectional view of figure 1 which shows the lower end of the skirt tightly closed by welding;
- figure 4 is a cross sectional view of the laminated material forming the skirt of the tube taken at a place where the laminated material is intended to be in contact with the product contained in the tube;
- figure 5 is a view from above showing a sheet of laminated material intended to be rolled to form the skirt of the tube of figure 1 according to a first embodiment of the invention;
- figure 6 is a cross sectional view of the skirt at mid height of the tube formed with the sheet of figure 5;
- figure 7 is a view from above showing a sheet of laminated material intended to be rolled to form the skirt of the tube of figure 1 according to a second embodiment of the invention;
- figure 8 is a cross sectional view of the skirt at mid height of the tube formed with the sheet of figure 7;
- figure 9 is a cross sectional view of the laminated paper forming the skirt of the tube taken in welding areas of the skirt;
- figure 10 is a view from above of the annular piece forming the shoulder of the tube of figure 1.

In the context of the invention, the axial orientation is defined in the direction of the main axis "A" of the tube directed from bottom. A radial orientation extends from inside, near the main axis "A", toward outside in every direction orthogonally from said main axis "A".

The term "container" is used herein to refer to an item which may contain a product. Such products are usually liquids, gels or pastes. Preferred containers include tubes and pouches. The container may further comprise a lid or a cap and, if necessary, attachment means for the lid or cap (such as a tube head or shoulder) before it forms a useful commercial container. As a consequence, the laminated material can form a tube skirt, an insert of a tube head or a combination thereof.

The term "flexible laminate" as used herein describes a laminate or a container made thereof which can bend or be bent easily and which does not break (unless it is bent too much). Herein in connection with the containers the term flexible indicates that if the container is subjected to a force, for example, by being filled with a liquid, or by applying pressure with a finger or a hand, it will change its form without breaking. A flexible container can also be considered to be a "squeezable" container.

The term "polymer" refers to a large molecule, or macromolecule, composed of many repeated subunits.

The term "PE" refers to polyethylene.

The term "paper layer" refers to a layer comprising cellulose fibers. This term includes bleached, unbleached, colored and barrier coated paper. It is preferably a bleached paper which is easier and quicker to recycle.

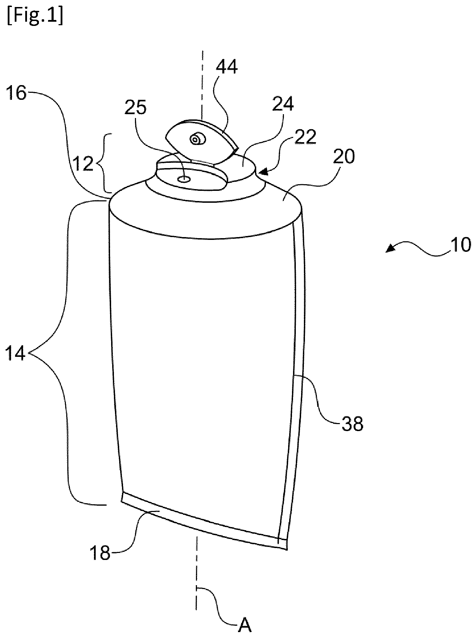

Figure 1 shows a tube 10 extending along a main axis "A". The tube 10 comprises a tube head 12 and a tube skirt 14.

The tube 10 is intended to contain a product such as liquids, gels or pastes. Advantageously, the tube 10 is intended to contain a cosmetic product.

The skirt 14 is made by a cylinder of a sheet 36 of laminated material 15. An upper end 16 of the skirt 14 is tightly secured to the tube head 12. A lower end 18 of the skirt 14 is tightly closed, for instance by welding, to enclose the content of the tube 10.

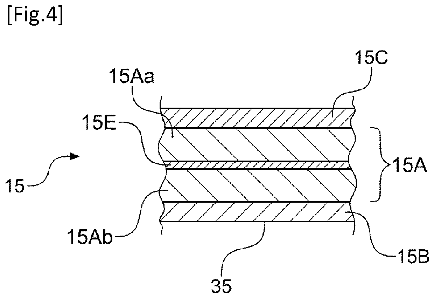

As illustrated in figure 4, the sheet 36 of laminated material 15 forming the skirt 14 here comprises one paper layer 15A.

The laminated material 15 can also comprise at least a most internal layer 15B. This most internal layer 15B is intended to be in direct contact with the product contained in the tube 10. The most internal layer forms at least a moisture barrier which protects the paper layer 15A against the moisture of the product. The most internal layer can also form an oxygen barrier.

In order to reduce the content of plastic in the global composition of the tube, the composition of the most internal layer 15B comprises no polyolefin. In particular, the most internal layer 15B does not comprise any PE.

The most internal layer 15B is for example formed by a coating of a material comprising acrylic copolymer latex. For instance, the most internal layer 15B is formed by, but not limited to, the RHOBARR^{™} 214 sold by the company DOW.

In variant, the most internal layer 15B may be a barrier paper based on micro (or nano) cellulose bases emulsion in the polymers. For instance the commercial products that can be used as or comprised in the coating layer include Diovan A297 from Solvay (aqueous emulsion of polyvinylidene chloride), Epotal SP-106D from BASF (aqueous dispersion of Styrene 1,3-butadiene), Galacryl 80.330.05 from Schmid Rhyner (Acrylic polymer), VaporCoat 2200 from Michelman (Acrylic polymer), Evcote 3050 from Akzo Nobel (Water based polyester) Cartaseal VWF Liquid from Archroma (acrylic polymer), MYSTOLENE PS from Catomance Technologies (paraffin wax and rosin), and AQUACER 497 from BYK Additives& Instruments (non-ionic aqueous emulsion of a paraffin wax).

In another variant the most internal layer 15B may be a barrier using grafted metal oxide compound layer deposited in gaseous conditions on the paper layer 15A. For instance, a gaseous chemical deposition of at least one thin layer on the paper layer 15A such as provided by diffusion of the gaseous precursors, the gaseous precursors diffusing at least in each spacing.

The most internal layer 15B may be realized by spraying the material in a liquid state.

As a variant, the laminated material 15 may comprises adhesive layers (not showed) or tie layers, especially to establish contact between the most internal layer 15B and the paper 15A layer. The adhesive layer can comprise any adhesive suitable for this use, such as EAA (Ethylene Acrylic Acid) or water-based adhesive.

Advantageously, the cellulosic fibers represent at least 60% in mass of the laminated material 15. More advantageously, the cellulosic fibers represent at least 70%, preferably at least 80%, in mass of the laminated material 15. Such a ratio of paper in the laminated material 15 allows a good recyclability of said laminated material 15.

Preferably, the paper layer 15A has a thickness comprised between 100 and 400 µm.

The paper layer 15A can comprise one or more paper layers, for instance two paper layers 15Aa, 15Ab.

To achieve a better flexibility of the tube, it is advantageous to have a paper layer 15A made of at least two paper layers glued together by any appropriate adhesive layer 15E.

For recycling purpose, it is advantageous that such paper layers 15Aa, 15Ab are glued by water based adhesive layers 15E. Such adhesive layer can be dissolved during repulping process so that paper layers are separated easily and quickly.

Preferably, the total thickness of the laminated material 15 is comprised between 300 and 450µm. This range of thickness allows good mechanical properties for a laminated material 15 comprising around 84% of cellulosic fibers in mass.

Advantageously, the total thickness of the paper layer 15A represent more than 50% of the total thickness of the laminated material 15. More advantageously, the total thickness of the paper layer 15A represent more than 70% of the total thickness of the laminated material 15. Such a ratio of paper in the laminated material 15 allows a good recyclability of said laminated material 15 while keeping good mechanical properties.

In the example illustrated by figure 4, an external layer 15C is arranged above said paper layer 15A. The external polymeric layer 15C is the first layer starting from the external surface of the laminated material 15. Such an external layer 15C might be formed by coating of the same material as the most internal layer 15B or it can comprise PE.

As represented at figure 1, the tube head 12 may comprise a shoulder 20 and a neck 22.

The neck 22 extends axially upward from the middle of the shoulder 20, along the main axis "A". The neck 22 is made of plastic material. For instance, the plastic material is PE, such as HDPE. In the example, the neck 22 is more particularly made in one piece. As variant, the neck could be made in two pieces.

The neck 22 presents a central part 24 which is intended to project upward above the shoulder 20. The central part 24 comprises a distribution hole 25 from which the content of the tube 10 is intended to be distributed.

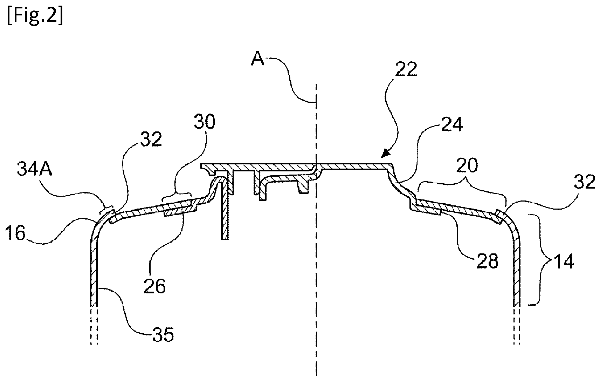

As represented on figure 2, the neck 22 also comprises a peripheric flange 26 which extends radially from the base of the central part 24. The peripheric flange 26 is radially delimited by an outer rim 28. The outer rim 28 here presents a continuous circular shape. The peripheric flange 26 is intended to be concealed under the shoulder 20, inside the tube 10.

The shoulder 20 extends radially with respect to the main axis "A" between the upper end 16 of the tube skirt 14 and the neck 22.

The shoulder 20 comprises an annular inner section 30 covering externally the flange 26. The annular inner section 30 of the shoulder 20 is tightly secured to the flange 26.

The shoulder 20 also presents an outer peripheral edge 32 arranged at the junction with the upper end 16 of the skirt 14.

The tubular skirt 14 is closed by welding at least one weld area 34A, 34B, 34C of the internal face 35 of the sheet 36 of the laminated material 15. For instance, the skirt 14 is closed by ultrasonic welding.

In the embodiment represented on figures 1, 2 and 3, the skirt comprises several weld areas 34A, 34B, 34C.

Two weld areas 34A, 34B are arranged at both end sections of the skirt 14 in order to close both ends of the skirt by welding.

The first weld area 34A is arranged at the end section welded against the periphery of the head 12. In the example represented on figure 2, the first weld area 34A is the portion of internal face 35 of the skirt 14 which covers the periphery of the shoulder 30.

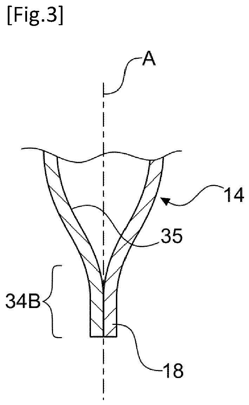

As shown on figure 3, the second weld area 34B is arranged at the bottom end of the skirt 14. As explained previously this bottom end is closed by pinching said end so that one half of the associated weld area 34B is flat welded against the other half of the said weld area 34B.

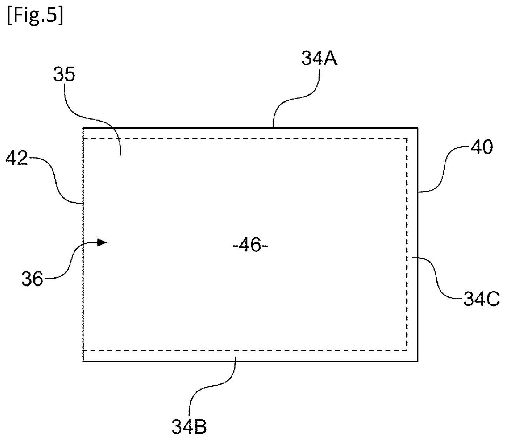

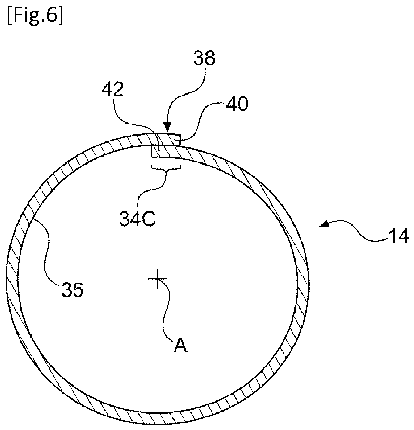

Moreover, the tubular skirt 14 is obtained by rolling the sheet 36 of laminated material 15, as represented on figure 5, and attaching joining sides 40, 42 together to form a longitudinal seam 38, visible at figure 6. At least one joining side of the sheet 36 of laminated material 15 comprises a third weld area 34C, as represented on figure 5.

As represented on figure 5, exactly one joining side 40 of the sheet 36 of laminated material 15 comprises such a weld area 34C to be weld against the external face of the second joining side 42 by welding.

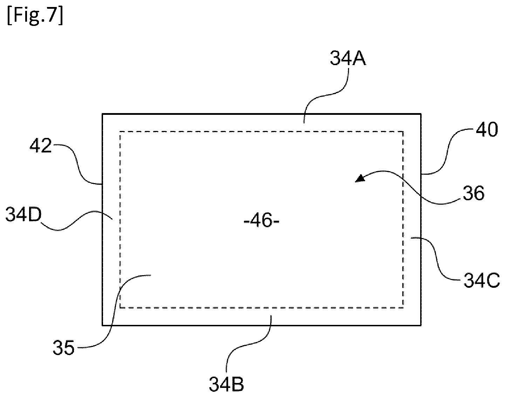

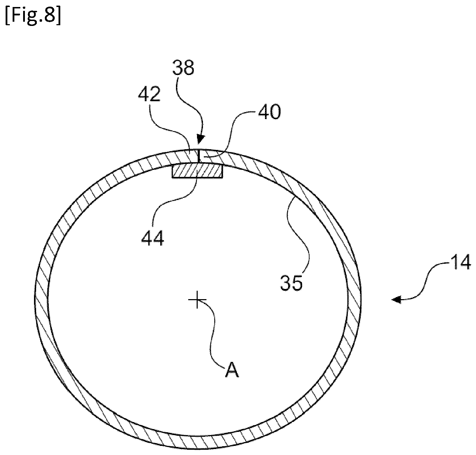

As a variant represented on figures 7 and 8, each of the two joining sides 40, 42 of the sheet 36 comprise a weld area 34C, 34D to be weld against a strip 44 of weldable material arranged inside the tube 10 along the longitudinal seam 38.

In order to obtain a strong welding, it is better to have a weldable layer 15D comprising polyolefin, such as PE. In order to obtain a strong welding, while minimizing the content of polyolefin in the tube 10, the internal face 35 of the sheet 36 of laminated material 15 is covered, only in the weld areas 34A, 34B, 34C, 34D, by a weldable layer 15D comprising polyolefin.

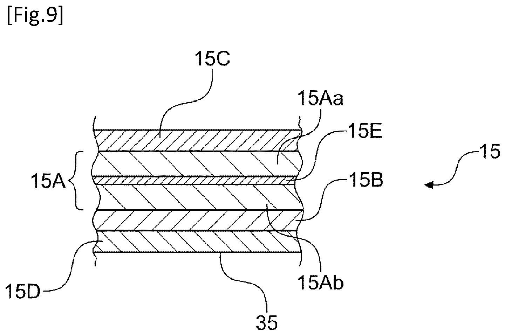

As represented on figure 9, the weldable layer 15D is added under the most internal layer 15C only in the weld areas 34A, 34B, 34C, 34D. In the rest of the sheet 36, as represented by reference 46 on figures 5 and 7, the most internal layer 15 B is not covered by any layer.

In the embodiment of figure 6, if the external layer 15C of the sheet 36 is made of the same material as the most internal layer 15B, it is better to add an external weldable layer above the external layer 15C along the second joining side 42 in order to obtain a strong seam 38.

The shoulder is also formed by a laminated material comprising cellulosic fibers.

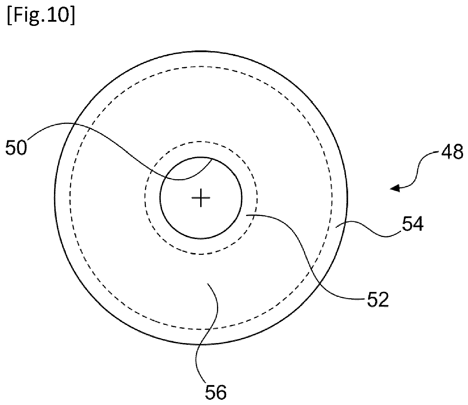

Preferably, the skirt 14 and the shoulder 20 are formed by the same laminated material 15. In this case, the composition of the most internal layer 15C of the shoulder in contact with the product comprises no polyolefin. As represented on figure 10, the shoulder 20 is formed by an annular piece 48 of laminated material 15.

The annular piece 48 of laminated material 15 present the shape of a disc having a central orifice 50. The central orifice 50 is intended to receive the central part 24 of the neck 22, while an annular inner section 52 of the internal face of the annular piece 48 is in contact with the upper face of the flange 26 of the neck 22.

An external face of the annular outer section 54 of the annular piece 48 is in contact with the skirt 14 and tightly secured to the upper end section 16 of the skirt 14.

An intermediate section 56 of the shoulder 20, radially comprised between the annular inner section 52 and the annular outer section 54 is not in contact with the neck 22, nor with the skirt 14. In the illustrated example, the first weld area 34A of the skirt 14 is folded over the upper face of the annular outer section 54 of the annular piece 48.

The annular outer section 54 of the annular piece 48 is tightly secured to the first weld area 34A of the skirt 14 by welding. For instance, the annular outer section 54 is secured to the skirt 14 by ultrasonic welding.

The annular outer section 54 of the shoulder 20 is attached the skirt 14 by welding one weld area 54 of the external face of the annular piece 48.

The annular inner section 52 of the shoulder 20 is attached to the neck 22 by welding one weld area 52 of the internal face of the annular piece 48.

The internal face of the annular piece 48 is covered, only in the weld area of the annular inner section 52, by a weldable layer 15D comprising polyolefin.

The external face of the annular piece 48 is covered, only in the weld area of the annular outer section 54, by a weldable layer 15D comprising polyolefin.

The rest of the internal face and the external face is free of weldable layer 15D such weldable layer comprising polyolefin.

The cellulose fibers represent at least 70% in mass of the tube 10, preferably at least 75%. For instance, the cellulosic fibers represent between 70 and 75% in mass of the tube 10, including the head 12 taking the cap into account.

The invention allows to obtain a tube easy to recycle and comprising a very huge ratio by mass of cellulosic fibers. Moreover, the quantity of plastic is minimized to further improve the recyclability of the tube.

## Claims

1. Tube (10) intended to contain a product and comprising at least a tubular skirt (14) extending along a main axis (A) made of a sheet (36) of laminated material (15) comprising at least one paper layer (15A) comprising cellulose fibers, the composition of a most internal layer (15B) of the skirt (14) in contact with the product comprising no polyolefin,
the tubular skirt (14) being closed by welding at least one weld area (34A, 34B, 34C, 34D) of an internal face (35) of the sheet (36) of laminated material (15), wherein the internal face (35) of the sheet (36) of laminated material (15) is covered, only in the at least one weld area (34A, 34B, 34C, 34D), by a weldable layer (15D) comprising polyolefin.

2. Tube (10) according to the previous claim, in which the weldable layer (15D) is added under said most internal layer (15B) in contact with the product.

3. Tube (10) according to the previous claim, in which the tubular skirt (14) comprises at least two weld areas (34A, 34B) arranged at both end sections of the skirt (14) in order to close both ends of the skirt (14) by welding.

4. Tube (10) according to the previous claim, in which at least one end (18) of the tubular skirt (14) is closed by pinching said end so that one half of the associated weld area (34B) is flat welded against the other half of the said weld area (34B).

5. Tube (10) according to any one of claims 3 or 4, in which at least one end of the tube (10) comprises head having a head (12) to distribute the product, the weld area (34A) associated with said end being welded against the periphery of the head (12).

6. Tube (10) according to any one of the previous claims, in which the tubular skirt (14) is obtained by rolling the sheet (36) of laminated material (15) and attaching joining sides (40, 42) together, at least one joining side (40) of the sheet (36) comprising a weld area (34C).

7. Tube (10) according to the previous claim, in which exactly one joining side (40) of the sheet (36) comprises a weld area (34C) to be weld against the external face of the second joining side (42) by welding.

8. Tube (10) according to the claim 6, in which the two joining sides (40, 42) of the sheet (36) comprise a weld area (34C, 34D) to be weld against a strip (44) of weldable material arranged inside the tube (10) along the joining sides (40, 42).

9. Tube (10) according to any one of the claims 5 to 8, in which the head (12) comprises a shoulder (20) made of an annular piece (48) of laminated material (15) comprising at least one paper layer (15A) comprising cellulose fibers, the composition of the most internal layer of the annular piece (48) in contact with the product comprising no polyolefin, said shoulder (20) extending radially between an upper end of the tube skirt (14) and the neck (22).

10. Tube (10) according to the claim 9, in which an annular inner section (52) of the shoulder (20) is attached to the neck (22) by welding one weld area of the internal face of the annular piece (48).

11. Tube according to the claim 10, wherein the internal face of the annular piece (48) is covered, only in the at least one weld area (52), by a weldable layer (15D) comprising polyolefin, the rest of the internal face being free of weldable layer (15D).

12. Tube (10) according to the previous claim, in which the shoulder (20) and the skirt (14) are made of the same laminated material (15).

13. Tube (10) according to any one of the previous claims, in which the cellulose fibers represent at least 70% in mass of the tube (10), preferably more than 80%.

14. Tube (10) according to any one of the previous claims, in which the most inner layer (15B) of the laminated material (15) comprises an acrylic copolymer latex.
